(19)

Europäisches
Patentamt
European
Patent Office
Office européen
des brevets

(11) **EP 3 569 892 B1**

(12) **EUROPEAN PATENT SPECIFICATION**

(45) Date of publication and mention
of the grant of the patent:
**04.11.2020 Bulletin 2020/45**

(51) Int Cl.:
*F16G 5/16* *(2006.01)*          *C22C 38/00* *(2006.01)*
*C21D 1/00* *(2006.01)*          *B21D 5/14* *(2006.01)*

(21) Application number: **19168688.0**

(22) Date of filing: **11.04.2019**

(54) **ENDLESS METAL BELT AND MANUFACTURING METHOD THEREFOR**

ENDLOSMETALLBAND UND HERSTELLUNGSVERFAHREN DAFÜR

COURROIE MÉTALLIQUE SANS FIN ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2018 JP 2018092236**

(43) Date of publication of application:
**20.11.2019 Bulletin 2019/47**

(73) Proprietor: **TOYOTA JIDOSHA KABUSHIKI
KAISHA
Toyota-shi, Aichi-ken, 471-8571 (JP)**

(72) Inventors:
 • **NAGAMIYA, Kiyomi
   Toyota-shi, Aichi-ken, 471-8571 (JP)**

 • **NISHIDA, Koji
   Toyota-shi, Aichi-ken, 471-8571 (JP)**
 • **MAEKAWA, Yoshihiro
   Toyota-shi, Aichi-ken, 471-8571 (JP)**
 • **NISHIGAYA, Shinya
   Toyota-shi, Aichi-ken, 471-8571 (JP)**

(74) Representative: **Kuhnen & Wacker
Patent- und Rechtsanwaltsbüro PartG mbB
Prinz-Ludwig-Straße 40A
85354 Freising (DE)**

(56) References cited:
**JP-A- S6 117 743     JP-A- 2011 195 861**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present disclosure relates to an endless metal belt and a method for manufacturing the endless metal belt.

As a type of continuously variable transmission (CVT), belt-type CVT has been known. As a belt for transmitting power in the belt-type CVT, an endless metal belt that is composed of a belt member formed by laminating (or stacking) metal rings and a plurality of elements supported by the belt member has been known.

The aforementioned belt member undergoes a tension, a bending stress, a frictional force, etc. when power is transmitted. Therefore, the belt member and the metal rings constituting the belt member are required to have various characteristics such as a strength, a friction resistance, etc., and therefore various studies are being made.

As one of the material for the metal ring member used in the belt member, maraging steel having a high strength and a high tenacity has been known (e.g., Japanese Unexamined Patent Application Publication No. S61-17743). However, since maraging steel contains a large amount of Ni, Co, Mo, etc. and hence is expensive, alternative materials haven been researched.

Japanese Unexamined Patent Application Publication No. S62-37535 discloses a multi-layered band formed by piling up a plurality of endless belt-like thin-plate metal bands on top of one another in a thickness direction, in which the innermost band is made of maraging steel and other layers are made of precipitation-hardened stainless steel.

Japanese Unexamined Patent Application Publication No. H11-351334 discloses a metal ring member formed by piling up a plurality of endless belt-like metal ring sheets on top of one another in a radial direction, in which the innermost and outermost ring sheets are made of maraging steel and intermediate ring sheets are made of precipitation-hardened stainless steel. According to Japanese Unexamined Patent Application Publication No. H11-351334, this metal ring member has a sufficient strength and durability.

Further, each of Japanese Unexamined Patent Application Publication No. 2011-195861 and International Patent Publication No. WO2015/087869 discloses a CVT ring member having a specific composition and including a nitride layer on its surface.

SUMMARY

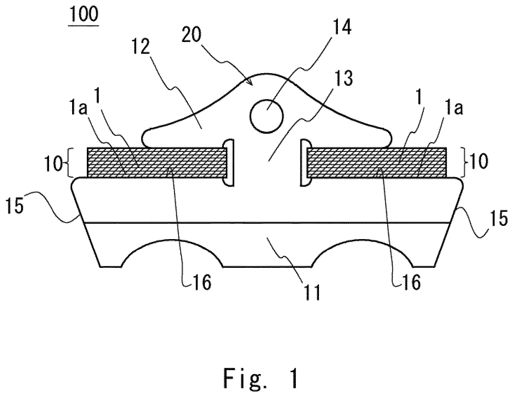

The present inventors have found that, as shown in later-described comparative examples, when metal rings, which constitute a belt member, are made of the same material, a larger tensile stress occurs in the metal ring in the innermost layer than those that occur in the other layers. For example, as shown in Japanese Unexamined Patent Application Publication No. H11-351334, it is expected that the tensile stress in the innermost layer is relieved (i.e., reduced) by using precipitation-hardened stainless steel in the intermediate layers. However, since stainless steel usually contains 10% or more of Cr, it is difficult to perform a nitriding process. Therefore, an abrasion resistance of stainless steel is low, causing a problem, in particular, in regard to an abrasion of an end face of a ring that comes into contact with a neck part 13 of an element (see Fig. 1).

The present disclosure has been made in view of the above-described circumstances and an object thereof is to provide an endless metal belt having an excellent abrasion resistance and a method for manufacturing such endless metal belts, capable of sufficiently reducing a tensile stress related to (or occurring in) a metal ring in the innermost layer.

A first exemplary aspect is an endless metal belt including:

a belt member formed by laminating a plurality of metal rings; and
an element supported by the belt member, in which
among the plurality of metal rings, a metal ring in an innermost layer is formed by a maraging steel plate, and another metal ring includes a nitride layer on its surface, contains, in mass%, 0.30 to 0.70% of C, 2.50% or less of Si, 1.00% or less of Mn, 1.00 to 4.00% of Cr, 0.50 to 3.00% of Mo, and 1.00% or less of V, and satisfies an

$$\text{an Equation 1: } 159 \times C(\%) + 91 \times Si(\%) + 68 \times Cr(\%) + 198 \times Mo(\%) + 646 \geq 1000;$$

a remnant of the another metal ring has a chemical composition composed of Fe and an inevitable impurity; a tensile strength of the another metal ring is 1,700 MPa or higher; and a surface hardness of the nitride layer is HV800 to HV950.

In another embodiment of the above-described endless belt, a thickness of the metal ring in the innermost layer is smaller than that of the another metal ring.

Another exemplary aspect is a method for manufacturing an endless metal belt including:

manufacturing a metal ring by forming a metal plate into a ring shape and performing a nitriding process, the metal plate containing, in mass%, 0.30 to 0.70% of C, 2.50% or less of Si, 1.00% or less of Mn, 1.00 to 4.00% of Cr, 0.50 to 3.00% of Mo, and 1.00% or less of V, and satisfying
an

$$\text{an Equation 1: } 159 \times C(\%) + 91 \times Si(\%) + 68 \times Cr(\%) + 198 \times Mo(\%) + 646 \geq 1000,$$

a remnant of the metal plate having a chemical composition composed of Fe and an inevitable impurity;
separately manufacturing a metal ring for an innermost layer by forming a maraging steel plate into a ring shape, a thickness of the maraging steel plate being smaller than that of the metal plate;
laminating at least one metal ring on an outer circumference of the metal ring for the innermost layer and thereby forming a belt member; and
disposing an element in the belt member.

According to the present disclosure, it is possible to provide an endless metal belt having an excellent abrasion resistance and a method for manufacturing such endless metal belts, capable of sufficiently reducing a tensile stress related to a metal ring in the innermost layer.

The above and other objects, features and advantages of the present disclosure will become more fully understood from the detailed description given hereinbelow and the accompanying drawings which are given by way of illustration only, and thus are not to be considered as limiting the present disclosure.

BRIEF DESCRIPTION OF DRAWINGS

Fig. 1 is a schematic cross section showing an example of an endless metal belt according to an embodiment;
Fig. 2 is a schematic partial perspective view showing an example of an endless metal belt according to an embodiment;
Fig. 3 is a flowchart showing an example of a method for manufacturing an endless metal belt according to an embodiment;
Fig. 4 is a flowchart showing an example of a process for manufacturing a metal ring;
Fig. 5 is a flowchart showing an example of a process for manufacturing a metal ring for the innermost layer; and
Fig. 6 is a graph showing maximum tensile stresses that occur in metal rings according to examples and comparative examples.

DESCRIPTION OF EMBODIMENTS

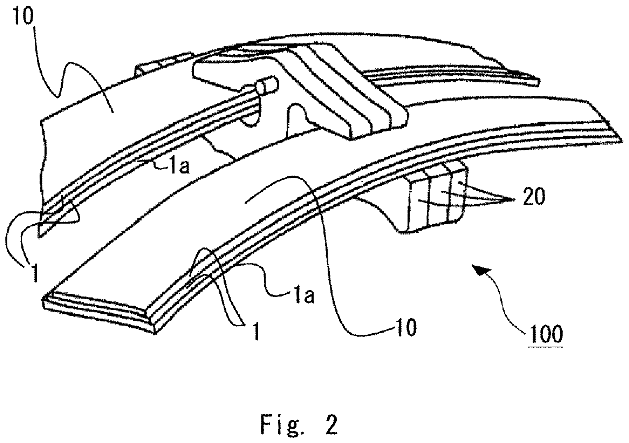

Firstly, a structure of an endless metal belt according to an embodiment is described with reference to Figs. 1 and 2. Fig. 1 is a schematic cross section showing an example of an endless metal belt according to this embodiment, and Fig. 2 is a schematic partial perspective view showing the example of the endless metal belt according to this embodiment.

An endless metal belt 100 shown in the examples of Figs. 1 and 2 includes belt members 10 each of which is formed by laminating a plurality of metal rings 1, and an element 20. An appropriate element may be selected from publicly-known elements and used as the element 20. In the example shown in Fig. 1, the element 20 has a base part 11, a head part 12, and a neck part 13 that connects the base part 11 with the head part 12. The head part 12 includes a projecting part 14 and a recessed part (not shown) located on the rear surface (i.e., the opposite surface) of the projecting part 14. In normal use, a side surface 15 of the base part 11 comes into contact with a pulley. Each of the two belt members 10 is disposed in a respective one of gaps formed by the base part 11, the head part 12, and the neck part 13 of the element 20, and they support the element 20. As shown in the example in Fig. 2, the element 20 is usually used with a plurality of other elements and the projecting part 14 of the element 20 is engaged with a recessed part of an adjacent element. Fig. 2 shows a part of the endless metal belt. That is, a plurality of elements 20 are arranged over the circumference of the belt member 10.

In the above-described endless metal belt 100, a metal ring 1a in the innermost layer of the belt member 10 comes into contact with a saddle surface 16 of the element 20. Further, the side surface of the belt member 10 comes into contact with the neck part 13 of the element 20.

In the endless metal belt according to this embodiment, maraging steel having a high strength and a high tenacity is used as the metal ring in the innermost layer of the belt member. Further, a steel that includes a nitride layer having a surface hardness of HV800 to HV950 on its surface, and has the above-specified composition having a tensile strength of 1,700 MPa or higher is used as each of the other metal rings. As a result, a tensile stress related to (i.e., occurring in) the innermost layer is reduced and an abrasion (i.e., wear) caused by the contact between the side part of the belt member and the element is suppressed. Consequently, durability of the endless metal belt is improved. Further, it is also possible to reduce the cost by using the maraging steel only for the innermost layer. Note that in this embodiment, the metal rings other than the metal ring in the innermost layer are referred to as other metal rings.

The maraging steel, which constitutes the innermost layer of the belt member, is a steel material in which a content of C (carbon) is 0.03% or lower, and a total content of Ni (nickel), Co (cobalt), Ti (titanium), and Al (aluminum) is 30% or higher, and which has a high strength and a high tenacity after undergoing an aging process.

In this embodiment, a chemical composition of the maraging steel may be selected as desired within a publicly-known range. As an example, the maraging steel may contain, in mass%, 0.03% or less of C, 18 to 19% of Ni, 8.5 to 9.5% of Co, 4.7 to 5.2% of Mo, 0.4 to 0.7% of Ti, 0.05 to 0.15% of Al, 0.5 to 1.5% of Cr (chromium). Further, the remnant of the maraging steel may have, for example, a chemical composition composed of Fe (iron) and inevitable impurities.

The method for the aging process for the maraging steel is not limited to any particular method. For example, the aging process may be performed for about 90 to 180 minutes at a temperature of about 450 to 500°C in a nitrogen atmosphere or a reduction atmosphere.

The maraging steel used in this embodiment is further subjected to a nitriding process. By undergoing the nitriding process, its surface hardness can be improved. The nitriding process can be performed for about 40 to 120 minutes at a temperature of about 400 to 450°C in an atmosphere in which: for example, 5 to 15 volume% is an ammonia gas; 1 to 3 volume% is a hydrogen gas; and the remnant is a nitrogen gas. Note that the hydrogen gas in the atmosphere is generated by thermal decomposition of an ammonia gas.

In this embodiment, a thickness of the metal ring in the innermost layer is not limited to any particular thickness and may be adjusted as appropriate according to the use of the belt member or the like. For example, the thickness of the metal ring may be no smaller than 100 $\mu$m and no larger than 200 $\mu$m. In this embodiment, the thickness of the metal ring in the innermost layer is preferably smaller than that of the later-described other metal rings, and more preferably smaller than that of the other metal rings by 5 $\mu$m or larger. By reducing the thickness of the metal ring in the innermost layer, a bending resistance of the metal ring in the innermost layer can be further improved. Further, by making the thickness of the metal ring in the innermost layer smaller than that of the other metal rings, a ratio of a load that the metal ring in the innermost layer bears can be made smaller compared to the load that the other rings bear. As a result, it is possible to further reduce the stress related to (i.e., occurring in) the metal ring in the innermost layer and thereby improve the overall durability of the endless metal belt. Further, owing to the thickness difference of 5 $\mu$m or larger, it is also possible to detect a wrong component halfway in the process.

In this embodiment, each of the metal rings other than the metal ring in the innermost layer includes a nitride layer on its surface, contains, in mass%, 0.30 to 0.70% of C, 2.50% or less of Si, 1.00% or less of Mn, 1.00 to 4.00% of Cr, 0.50 to 3.00% of Mo, and 1.00% or less of V, and satisfies an

an Equation 1: $159 \times C(\%) + 91 \times Si(\%) + 68 \times Cr(\%) + 198 \times Mo(\%) + 646 \geq 1000$.

The remnant of the other metal ring has a chemical composition composed of Fe and inevitable impurities, and a tensile strength of the other metal ring is 1,700 MPa or higher. Further, a surface hardness of the nitride layer is HV800 to HV950. By using the above-described metal rings, it is possible to reduce a stress related to (i.e., occurring in) the metal ring in the innermost layer. Further, side surfaces of the metal rings that come into contact with the element have an excellent abrasion resistance.

A chemical composition of the above-described other metal rings is described hereinafter.

C: 0.30 to 0.70%

C needs to be contained in 0.30% or more in order to ensure a strength and a tenacity. However, in order to prevent (or minimize) deterioration in ductility and tenacity due to formation of coarse carbides, a content ratio of C is set to 0.70% or less.

Si: 2.50% or less

In order to prevent (or minimize) deterioration in ductility and nitriding property, Si (silicon) is set to 2.50% or less. However, Si (silicon) may be contained in 0.10% or more to increase the strength.

Mn: 1.00% or less

In order to prevent (or minimize) deterioration in ductility, Mn (manganese) is set to 1.00% or less. However, Mn (manganese) may be contained in 0.10% or more to increase the strength.

Cr: 1.00 to 4.00%

In order to increase the strength and improve the nitriding property, Cr is set to 1.00% or more. However, when a content ratio of Cr increases, the nitriding property is reduced, rather than being increased, thus making the nitriding process difficult. Therefore, Cr is set to 4.00% or less.

Mo: 0.50 to 3.00%

It is possible to improve the strength and the tenacity without deteriorating the ductility by setting a content radio of Mo (molybdenum) to 0.50% or more. However, 3.00% or less of Mo (molybdenum) sufficiently improves the strength and the tenacity.

V: 1.00% or less

V (vanadium) may be contained in 0.1% or more in order to refine (or reduce) grain sizes of crystals and improve the strength and the tenacity. However, in order to suppress coarse carbides and thereby prevent (or minimize) deterioration in strength and tenacity, a content ratio of V is set to 1.00% or less.

Ni: 4.00% or less

The above-described other metal rings may further contain Ni. It is possible to suppress generation of carbides and thereby improve the strength and the tenacity by containing Ni. When Ni is contained, its content ratio is preferably 4.00% or less and more preferably 2.0% or less.

$$\text{Equation 1: } 159 \times C(\%) + 91 \times Si(\%) + 68 \times Cr(\%) + 198 \times Mo(\%) + 646 \geq 1000$$

When the chemical composition of the above-described other metal rings satisfies the above-shown Equation 1, they become metal rings having an excellent fatigue metal strength characteristic and an excellent fatigue life.

In the chemical composition of the above-described other metal rings, the remnant other than the above-described elements is composed of Fe and unavoidable impurities. The inevitable impurities are elements that are inevitably mixed in the raw material or mixed during the manufacturing process. They are not limited to any particular elements and examples thereof include S (sulfur), P (phosphorus), N (nitrogen), O (oxygen) Al, Ti, etc.

A tensile strength of the above-described other metal rings is 1,700 MPa or higher. By using metal rings having a tensile strength of 1,700 MPa or higher in the other layers, a tensile stress related to (i.e., occurring in) the metal ring in the innermost layer can be reduced.

In this embodiment, the tensile strength was measured by the following tensile test. That is, a target metal ring was looped over a pair of rollers and then the metal ring was pulled through the pair of rollers. Note that a value that was obtained by measuring changes in the load that had occurred just before the metal ring was ruptured in the above-described tensile test and dividing the maximum load obtained by the measurement by a cross-sectional area of the ring member was defined as a tensile strength of the metal ring.

Further, a surface hardness of the nitride layer of the above-described other metal rings is HV800 to HV950. By adjusting the surface hardness to HV800 or higher, it is possible to prevent (or minimize) an abrasion on the side surface of the metal ring that comes into contact with the element. Further, by adjusting the surface hardness to HV950 or lower, it is possible to prevent the metal ring from becoming brittle and thereby to ensure the strength.

In this embodiment, a thickness of the other metal rings is not limited to any particular thickness and may be adjusted as appropriate according to the use of the belt member or the like. For example, the thickness of each of the other metal rings may be no smaller than 100 $\mu$m and no larger than 200 $\mu$m.

Further, a thickness of the nitride layer in each of the other metal rings is not limited to any particular thickness, and may be, for example, no smaller than 5 $\mu$m and no larger than 50 $\mu$m.

In this embodiment, the total number of laminated metal rings constituting one belt member, including the metal ring in the innermost layer and the other metal rings, should be at least two. For example, the total number of laminated metal rings may be two to twelve.

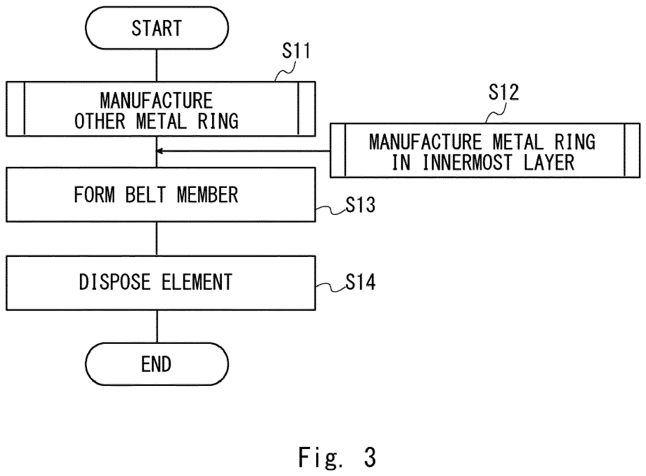

Next, a method for manufacturing an endless metal belt is described with reference to Fig. 3. Fig. 3 is a flowchart showing an example of a method for manufacturing an endless metal belt according to this embodiment. The method for manufacturing an endless metal belt shown in the example in Fig. 3 includes a step of manufacturing a metal ring(s) by using a metal plate(s) having a specific chemical composition (S11), a step of separately manufacturing a metal ring for the innermost layer by using a maraging steel plate (S12), a step of laminating the other metal ring(s) on an outer circumference of the metal ring for the innermost layer and thereby forming a belt member (S13), and a step of disposing an element(s) in the belt member and thereby manufacturing an endless metal belt (S14). According to the manufacturing method in accordance with this embodiment, it is possible to sufficiently reduce a tensile stress related to the metal ring in the innermost layer and suitably manufacture the above-described endless metal belt having an excellent abrasion resistance. Further, in the manufacturing method according to this embodiment, since the maraging steel plate thinner than the metal plate is used, it is possible to prevent an operator or a worker from mistaking the maraging steel plate for the metal plate, and vice versa, which would otherwise be difficult to distinguish one from the other based on their external appearances.

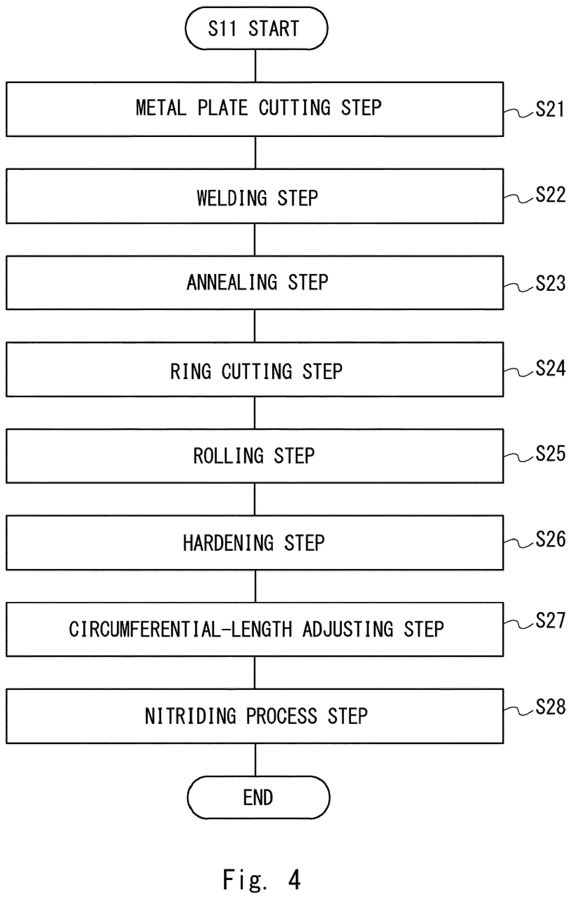

Details of the step of manufacturing a metal ring(s) (S11) are described hereinafter with reference to Fig. 4. Fig. 4 is a flowchart showing an example of the step of manufacturing a metal ring. As shown in the example in Fig. 4, the step of manufacturing a metal ring includes a metal plate cutting step (S21), a welding step (S22), an annealing step (S23), a ring cutting step (S24), a rolling step (S25), a hardening step (S26), a circumferential-length adjusting step (S27), and a nitriding process step (S28). If necessary, the manufacturing step may include other steps such as a tempering step that is performed after the hardening step (S26).

The steel material (metal plate) cutting step (S21) is a step of cutting out a metal plate having a predetermined size from a long metal plate such as a rolled metal plate. The cut-out metal plate is bent (or curved) into a tubular shape so that ends of the metal plate are brought together.

In the welding step (S22), the end parts of the tubular metal plate, which have been brought together, are welded, so that a tubular drum is formed.

Next, in the annealing step (S23), the drum is annealed to remove distortions caused in the welding process.

Next, in the ring cutting step (S24), the annealed drum is cut into a predetermined width, so that a plurality of rings are formed. If necessary, barrel polishing or the like may be performed for the obtained rings in order to remove burrs formed in the cutting process.

In the rolling step (S25), the obtained metal ring is rolled, so that the circumferential length of the metal ring is made closer to a predetermined circumferential length. After the rolling step, the hardening step (S26) is performed and, if necessary, a tempering step is performed after the hardening step.

In the hardening step (S26), for example, the metal ring is heated to 850°C to 1,000°C and then quenched. The tempering step can be performed, for example, at 400 to 500°C, and at or below a temperature of the nitriding process.

Next, the circumferential length of the metal ring is made equal to a predetermined circumferential length by the circumferential-length adjusting step (S27). In the circumferential-length adjusting step, for example, firstly, two rotatable pulleys, which have rotation shafts parallel to each other and are arranged so that they can be moved in approaching and receding directions, are prepared. Next, the metal ring is looped along the rotatable pulleys. After that, the rotation shafts are gradually moved away from each other while rotating the pulleys, so that the metal ring is expanded and its circumferential length is adjusted.

The metal ring, whose circumferential length has been adjusted, is subjected to the nitriding process step (S28). The nitriding process can be performed for about 40 to 120 minutes at a temperature of about 400 to 450°C in an atmosphere in which: for example, 5 to 15 volume% is an ammonia gas; 1 to 3 volume% is a hydrogen gas; and the remnant is a nitrogen gas.

In this way, it is possible to obtain a metal ring which has a tensile strength of 1,700 MPa or higher and whose nitride layer has a surface hardness of HV800 to HV950.

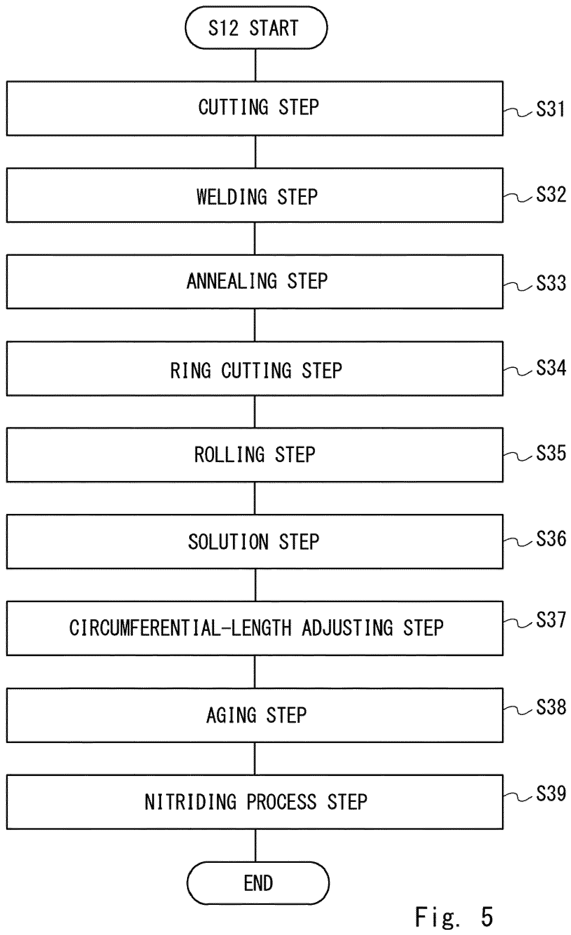

Next, the step of manufacturing a metal ring for the innermost layer (S12) is described with reference to Fig. 5. Fig. 5 is a flowchart showing an example of the step of manufacturing a metal ring for the innermost layer. As shown in the example in Fig. 5, a metal ring for the innermost layer can be manufactured, by using the above-described maraging steel, by performing a maraging steel cutting step (S31), a welding step (S32), an annealing step (S33), a ring cutting step (S34), a rolling step (S35), an optional solution step (S36), a circumferential-length adjusting step (S37), an aging step (S38), a nitriding process step (S39).

Note that by performing the solution step (S36), a processing stresses that has been caused in the rolling step can be removed. Therefore, if necessary, the solution step (S36) is performed after the rolling step. The solution step can be performed, for example, for one to three minutes in a temperature range of 820 to 860°C.

The aging step (S38) can be performed, for example, for about 90 to 180 minutes at a temperature of about 450 to 500°C in a nitrogen atmosphere or a reduction atmosphere.

Further, the nitriding process step (S39) can be performed, for example, for about 40 to 120 minutes at a temperature of about 400 to 450°C in an atmosphere in which: 5 to 15 volume% is an ammonia gas; 1 to 3 volume% is a hydrogen gas; and the remnant is a nitrogen gas.

[Example]

The present disclosure is described hereinafter in a concrete manner by using examples and comparative examples. Note that the present disclosure is not limited by the following descriptions.

<Manufacturing Example 1: Manufacturing of Metal Ring 1>

A long maraging steel plate was prepared and a metal ring 1 having a thickness of about 180 $\mu$m and a Young's modulus of 190 GPa was manufactured in accordance with the above-described step of manufacturing a metal ring.

<Manufacturing Example 2: Manufacturing of Metal Ring 2>

A long steel plate having the following properties was prepared. That is, the steel plate contained, in mass%, 0.30 to 0.70% of C, 2.50% or less of Si, 1.00% or less of Mn, 1.00 to 4.00% of Cr, 0.50 to 3.00% of Mo, and 1.00% or less of V, and satisfies an

$$\text{Equation 1: } 159 \times C(\%) + 91 \times Si(\%) + 68 \times Cr(\%) + 198 \times Mo(\%) + 646 \geq 1000.$$

Further, the remnant of the steel plate was composed of Fe. Then, from the prepared steel plate, a metal ring 2 which had a thickness of about 185 $\mu$m, a tensile strength of 1,700 MPa or higher, and a Young's modulus of 210 GPa, and included a nitride layer having a thickness of 30 $\mu$m and a surface hardness of HV800 to HV950 was manufactured in accordance with the above-described step of manufacturing a metal ring.

<Example: Manufacturing of Endless Metal Belt>

By using the metal ring 1 in the Manufacturing Example 1 for the innermost layer, eight metal rings each of which was equivalent to the above-described metal ring 2 were laminated on an outer circumference of the metal ring 1, so that a belt member having nine layers was obtained. By using two belt members each of which was obtained as described above, elements were arranged as shown in Figs. 1 and 2, so that an endless metal belt according to an example was obtained.

<Comparative Example: Manufacturing of Endless Metal Belt>

A belt member having nine layers was obtained by using the metal ring 1 for each of the metal rings constituting the belt member. By using two belt members each of which was obtained as described above, elements were arranged as shown in Figs. 1 and 2, so that an endless metal belt according to a comparative example was obtained.

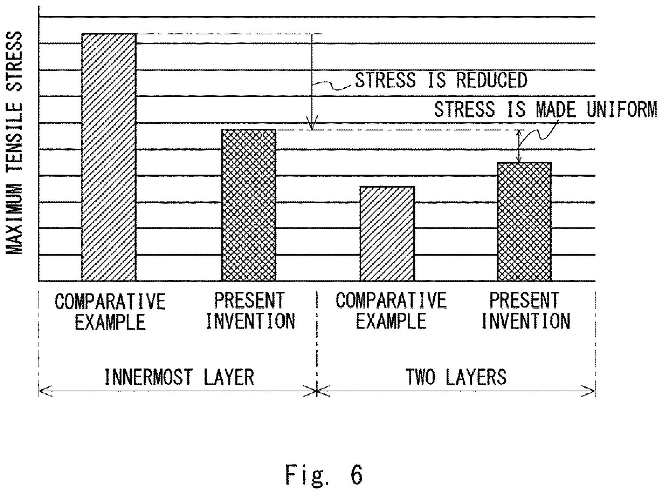

Regarding the belt members 1 and 2 used in the example and the comparative example, Fig. 6 shows calculation results of maximum tensile stresses in the innermost layer and the second layer adjacent to the innermost layer. As shown in Fig. 6, it was shown that the maximum tensile stress related to (i.e., occurring in) the innermost layer of the example was reduced from the maximum tensile stress related to (i.e., occurring in) the innermost layer of the comparative example by 6.4%. In the example, the maximum tensile stress in the second layer was increased. From this fact, it is presumed that the tensile stress related to the innermost layer was dispersed into the other layer(s). As described above, according to this embodiment, it is possible to provide an endless metal belt having an excellent abrasion resistance and excellent durability, capable of sufficiently reducing a tensile stress related to (i.e., occurring in) a metal ring in the innermost layer.

**Claims**

1.  An endless metal belt comprising:

    a belt member (1,1a) formed by laminating a plurality of metal rings (10); and
    an element (20) supported by the belt member (10), wherein
    among the plurality of metal rings(1,1a), a metal ring in an innermost layer (1a) is formed by a maraging steel plate, and
    another metal ring (1) **characterized in that** said another metal ring (1) includes a nitride layer on its surface, contains, in mass%, 0.30 to 0.70% of C, 2.50% or less of Si, 1.00% or less of Mn, 1.00 to 4.00% of Cr, 0.50 to 3.00% of Mo, and 1.00% or less of V, and satisfies an

$$\text{Equation 1: } 159 \times C(\%) + 91 \times Si(\%) + 68 \times Cr(\%) + 198 \times Mo(\%) + 646 \geq 1000;$$

    a remnant of the another metal ring has a chemical composition composed of Fe and an inevitable impurity; a tensile strength of the another metal ring is 1,700 MPa or higher; and a surface hardness of the nitride layer is HV800 to HV950.

2.  The endless metal belt according to Claim 1, wherein a thickness of the metal ring in the innermost layer (1a) is smaller than that of the another metal ring (1).

3.  A method for manufacturing an endless metal belt comprising:

    manufacturing a metal ring (1) by forming a metal plate into a ring shape and performing a nitriding process (S11), the metal plate containing, in mass%, 0.30 to 0.70% of C, 2.50% or less of Si, 1.00% or less of Mn, 1.00 to 4.00% of Cr, 0.50 to 3.00% of Mo, and 1.00% or less of V, and satisfying an

$$\text{Equation 1: } 159 \times C(\%) + 91 \times Si(\%) + 68 \times Cr(\%) + 198 \times Mo(\%) + 646 \geq 1000,$$

    a remnant of the metal plate having a chemical composition composed of Fe and an inevitable impurity;
    separately manufacturing a metal ring for an innermost layer (1a) by forming a maraging steel plate into a ring shape, a thickness of the maraging steel plate being smaller than that of the metal plate (S12);
    laminating at least one metal ring (1) on an outer circumference of the metal ring for the innermost layer (1a) and thereby forming a belt member (S13); and
    disposing an element (20) in the belt member (S14).

**Patentansprüche**

1.  Endlosmetallriemen, aufweisend:

    ein Riemenelement (1, 1a), das durch Laminieren einer Mehrzahl an Metallringen (10) gebildet wird; und
    ein Element (20), das durch das Riemenelement (10) getragen wird, wobei
    unter der Mehrzahl an Metallringen (1, 1a) ein Metallring in einer innersten Schicht (1a) durch eine martensitausgehärtete Stahlplatte gebildet wird, und
    einen weiteren Metallring (1), der **dadurch gekennzeichnet ist, dass** der weitere Metallring (1) eine Nitridschicht auf seiner Oberfläche aufweist, in Massenprozent 0,30 bis 0,70 % an C, 2,5 % oder weniger an Si, 1,00 % oder weniger an Mn, 1,00 bis 4,00 % an Cr, 0,50 bis 3,0 % an Mo, und 1,00 % oder weniger an V enthält, und

    eine Gleichung 1 erfüllt: $159 \text{ x } C(\%) + 91 \text{x} Si(\%) + 68 \text{x} Cr(\%) + 198 \text{x} Mo(\%) + 646 \geq 1000;$

ein Überbleibsel des weiteren Metallrings eine chemische Zusammensetzung aufweist, die aus Fe und einer unvermeidbaren Unreinheit besteht; eine Zugfestigkeit des weiteren Metallrings 1.700 MPa oder mehr beträgt; und eine Oberflächenhärte der Nitridschicht HV800 bis HV950 beträgt.

**2.** Endlosmetallriemen nach Anspruch 1, wobei eine Dicke des Metallrings in der innersten Schicht (1a) geringer ist als diejenige des weiteren Metallrings (1).

**3.** Verfahren zum Herstellen eines Endlosmetallriemens, aufweisend:

Herstellen eines Metallrings (1) durch Formen einer Metallplatte in eine Ringform und Durchführen eines Nitriervorgangs (S11), wobei die Metallplatte in Massenprozent 0,30 bis 0,70 % an C, 2,50 % oder weniger an Si, 1,00 % oder weniger an Mn, 1,00 bis 4,00 % an Cr, 0,50 bis 3,00 % an Mo, und 1,00 % oder weniger an V aufweist, und eine Gleichung 1 erfüllt:

$$159 \text{ x } C(\%)+91xSi(\%)+68xCr(\%)+198xMo(\%)+646 \geq 1000,$$

wobei ein Überbleibsel der Metallplatte eine chemische Zusammensetzung aufweist, die aus Fe und einer unvermeidbaren Unreinheit besteht;
separates Herstellen eines Metallrings für eine innerste Schicht (1a) durch Formen einer martensitausgehärteten Stahlplatte in eine Ringform, wobei eine Dicke der martensitausgehärteten Stahlplatte geringer ist als diejenige der Metallplatte (S12);
Laminieren zumindest eines Metallrings (1) auf einem äußeren Umfang des Metallrings für die innerste Schicht (1a) und dadurch Bilden eines Riemenelements (S13); und
Anordnen eines Elements (20) in dem Riemenelement (S14).

**Revendications**

**1.** Courroie sans fin en métal comprenant :

un tronçon de courroie (1, la) formé par stratification de plusieurs anneaux en métal (10) ; et
un élément (20) supporté par le tronçon de courroie (10), où
parmi les plusieurs anneaux en métal (1, la), un anneau en métal dans une couche interne (1a) est formé par une plaque d'acier maraging, et
un autre anneau en métal (1) : **caractérisée en ce que** ledit autre anneau en métal (1) inclut une couche de nitrure sur sa surface, contient, en % en masse, 0,30 à 0,70 % de C, 2,50 % ou moins de Si, 1,00 % ou moins de Mn, 1,00 à 4,00 % de Cr, 0,50 à 3,00 % de Mo, et 1,00 % ou moins de V, et satisfait une équation 1 :

$$159xC(\%)+91xSi(\%)+68xCr(\%)+198xMo(\%)+646 \geq 1\,000\ ;$$

un reliquat de l'autre anneau en métal présente une composition chimique constituée de Fe et d'une impureté inévitable ; une résistance à la traction de l'autre anneau en métal est de 1 700 MPa ou supérieure ; et une dureté de surface de la couche de nitrure est HV800 à HV950.

**2.** Courroie sans fin en métal selon la revendication 1, où une épaisseur de l'anneau en métal dans la couche interne (1a) est inférieure à celle de l'autre anneau en métal (1).

**3.** Procédé de fabrication d'une courroie sans fin en métal comprenant :

la fabrication d'un anneau en métal (1) par formation d'une plaque en métal dans une forme d'anneau et la réalisation d'un procédé de nitruration (S11), la plaque en métal contenant, en % en masse, 0,30 à 0,70 % de C, 2,50 % ou moins de Si, 1,00 % ou moins de Mn, 1,00 à 4,00 % de Cr, 0,50 à 3,00 % de Mo, et 1,00 % ou moins de V, et satisfaisant une équation 1:

$$159 \times C(\%) + 91 \times Si(\%) + 68 \times Cr(\%) + 198 \times Mo(\%) + 646 \geq 1\,000 \, ;$$

un reliquat de la plaque en métal présentant une composition chimique constituée de Fe et d'une impureté inévitable ;

la fabrication séparée d'un anneau en métal pour une couche interne (1a) en formant une plaque d'acier maraging dans une forme d'anneau, une épaisseur de la plaque d'acier maraging étant inférieure à celle de la plaque en métal (S12) ;

la stratification d'au moins un anneau en métal (1) sur une circonférence externe de l'anneau en métal pour la couche interne (1a) et la formation par-là d'un tronçon de courroie (S13) ; et

la disposition d'un élément (20) dans le tronçon de courroie (S14).

Fig. 1

Fig. 2

START

MANUFACTURE
OTHER METAL RING
S11

MANUFACTURE METAL RING
IN INNERMOST LAYER
S12

FORM BELT MEMBER
S13

DISPOSE ELEMENT
S14

END

Fig. 3

Fig. 4

S12 START

| | |
|---|---|
| CUTTING STEP | S31 |

| | |
|---|---|
| WELDING STEP | S32 |

| | |
|---|---|
| ANNEALING STEP | S33 |

| | |
|---|---|
| RING CUTTING STEP | S34 |

| | |
|---|---|
| ROLLING STEP | S35 |

| | |
|---|---|
| SOLUTION STEP | S36 |

| | |
|---|---|
| CIRCUMFERENTIAL-LENGTH ADJUSTING STEP | S37 |

| | |
|---|---|
| AGING STEP | S38 |

| | |
|---|---|
| NITRIDING PROCESS STEP | S39 |

END

Fig. 5

EP 3 569 892 B1

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6117743 B
- JP S6237535 B
- JP H11351334 B
- JP 2011195861 A
- WO 2015087869 A